# EUROPÄISCHE PATENTSCHRIFT

(11) **EP 2 480 591 B1**
(45) Veröffentlichungstag und Bekanntmachung des Hinweises auf die Patenterteilung: **06.11.2013**
(21) Anmeldenummer: 10751580.1
(22) Anmeldetag: 03.09.2010
(51) Int. Cl.: C08G 65/26, B01D 17/04, C10G 33/04

(54) **ALKOXYLIERTE CYCLISCHE DIAMINE UND DEREN VERWENDUNG ALS EMULSIONSSPALTER**
ALKOXYLATED CYCLIC DIAMINES AND USE THEREOF AS EMULSION BREAKERS
DIAMINES CYCLIQUES ALKOXYLÉES ET LEUR UTILISATION COMME DÉSÉMULSIFIANT

(30) Priorität: 24.09.2009 DE 102009042971
(43) Veröffentlichungstag der Anmeldung: 01.08.2012
(73) Patentinhaber: Clariant Finance (BV) Limited, Road Town, Tortola (VG)
(72) Erfinder: COHRS, Carsten, 60316 Frankfurt (DE); DILSKY, Stefan, 84503 Altötting (DE); LEINWEBER, Dirk, 65779 Kelkheim (DE); FEUSTEL, Michael, 55278 Köngernheim (DE)
(74) Vertreter: Mikulecky, Klaus
(86) Internationale Anmeldenummer: PCT/EP2010/005429
(87) Internationale Veröffentlichungsnummer: WO 2011/035854

(56) Entgegenhaltungen:
- EP-A1- 0 584 967
- WO-A1-2004/108863
- WO-A1-2008/094238
- WO-A1-2008/094239
- US-A- 2 819 222
- US-A- 2 875 157

## Beschreibung

Die vorliegende Erfindung betrifft die Verwendung alkoxylierter, cyclischer Diamine zur Spaltung von Wasser-ÖI-Emulsionen, insbesondere in der Rohölgewinnung, und entsprechende Diamine.

Rohöl fällt bei seiner Förderung als Emulsion mit Wasser an. Vor der Weiterverarbeitung des Rohöls müssen diese Rohölemulsionen in den Öl- und den Wasseranteil gespalten werden. Hierzu bedient man sich im Allgemeinen sogenannter Erdölemulsionsspalter. Es handelt sich bei Erdölemulsionsspaltern um grenzflächenaktive polymere Verbindungen, die in der Lage sind, innerhalb kurzer Zeit die erforderliche Trennung der Emulsionsbestandteile zu bewirken.

Als Demulgatoren kommen hauptsächlich alkoxylierte Alkylphenol-FormaldehydHarze, nichtionische Alkylenoxid-Blockcopolymere sowie mit Bisepoxiden vernetzte Varianten zum Einsatz. Übersichten liefern "Something Old, Something New: A Discussion about Demulsifiers", T. G. Balson, S. 226-238 in Proceedings in the Chemistry in the Oil Industry VIII Symposium, 3. - 5.11.2003, Manchester, GB, sowie "Crude-Oil Emulsions: A State-Of-The-Art Review", S. Kokal, S. 5-13, Society of Petroleum Engineers SPE 77497.

US-4 032 514 offenbart die Verwendung von Alkylphenol-Aldehydharzen zur Spaltung von Erdölemulsionen. Diese Harze sind aus der Kondensation eines para-Alkylphenols mit einem Aldehyd, meistens Formaldehyd, erhältlich.

Solche Harze werden oft in alkoxylierter Form verwendet, wie es beispielsweise in DE-A-24 45 873 offenbart ist. Hierzu werden die freien phenolischen OH-Gruppen mit einem Alkylenoxid umgesetzt.

Neben den freien phenolischen OH-Gruppen können auch freie OH-Gruppen von Alkoholen oder NH-Gruppen von Aminen alkoxyliert werden, wie beispielsweise in US-5 401 439 offenbart wird.

Als weitere Erdölemulsionsspalter sind in US-4 321 146 Alkylenoxid-Blockcopolymere und in US-5 445 765 alkoxylierte Polyethylenimine offenbart.

Alkoxylierte dendritische Polyester (Dendrimere) sind als biologisch abbaubare (OECD 306) Erdölemulsionsspalter in DE-A-103 29 723 offenbart. Ebenfalls nach OECD 306 biologisch abbaubare Spalter sind in DE-A-103 25 198 offenbart. Hierbei handelt es sich um alkoxylierte, vernetzte Polyglycerine.

US-2819222 lehrt ein Verfahren zur Spaltung von Waser-in-Öl-Emulsionen, bei dem die Emulsionsspaltung durch alkoxylierte Phenolderivate bewirkt wird.

US-2875157 lehrt ein Verfahren zur Spaltung von Wasser-in-Öl-Emulsionen, bei dem die Spaltung durch die Zugabe eines Alkoxylats mit einem Molekulargewicht von mindestens 1000 Einheiten, welches Propoxyeinheiten umfasst, und bei dem Alkoxygruppen direkt an ein Stickstoffatom gebunden sind, bewirkt wird.

WO-2008/094238 lehrt Amin-gestartete Polyole mit einer Funktionalität zwischen 3 und 4, die das Produkt aus C₂- bis C₄-Alkylenoxiden und Orthocyclohexandiamin sind.

WO-2008/094239 lehrt Amin-gestartete Polyole mit einer Funktionalität zwischen 3 und 4, die das Produkt aus C₂- bis C₄-Alkylenoxiden und Aminocyclohexylalkylaminen sind.

EP-0584967 lehrt N-alkoxylierte Imidazolidone, die endständige freie OH- oder NH₂-Gruppen aufweisen und die zur Herstellung von Polyurethanschäumen geeignet sind.

Die offenbarten Spalter können als einzelne Komponenten oder in Mischungen mit anderen Emulsionsspaltern eingesetzt werden.

Die unterschiedlichen Eigenschaften (z. B. Asphalten-, Paraffin- und Salzgehalt, chemische Zusammensetzung der natürlichen Emulgatoren) und Wasseranteile verschiedener Rohöle machen es unabdingbar, die bereits vorhandenen Erdölspalter weiter zu entwickeln. Insbesondere steht eine niedrige Dosierrate und breite Anwendbarkeit des einzusetzenden Erdölspalters neben der anzustrebenden höheren Effektivität aus ökonomischer und ökologischer Sicht im Vordergrund.

Es ergab sich somit die Aufgabe, neue Erdölspalter zu entwickeln, die den bereits bekannten Erdölspaltern in der Wirkung gleichwertig oder überlegen sind, und in noch niedriger Dosierung eingesetzt werden können.

Es stellte sich überraschenderweise heraus, dass alkoxylierte cyclische Diamine, ggf. nach Vernetzung mit multifunktionalen Glycidethern, bereits bei sehr niedriger Dosierung eine ausgezeichnete Wirkung als Erdölspalter zeigen.

Gegenstand der Erfindung ist daher die Verwendung von cyclischen Diaminen, deren reaktive Gruppen mit mindestens einem C₂- bis C₄-Alkylenoxid alkoxyliert sind, so dass der mittlere Alkoxylierungsgrad zwischen 1 und 200 Alkylenoxideinheiten pro reaktiver Gruppe liegt, wobei unter mittlerem Alkoxylierungsgrad hier die durchschnittliche Zahl von Alkoxyeinheiten verstanden wird, die an jede reaktive Gruppe angelagert sind, zur Spaltung von Wasser in Öl-Emulsionen, in Mengen von 0,0001 bis 5 Gew.-%, bezogen auf den Ölgehalt der zu spaltenden Emulsion.

Ein weiterer Gegenstand der Erfindung ist ein Verfahren zur Spaltung einer Wasser-in-Öl-Emulsion, indem der Emulsion 0,0001 bis 5 Gew.-%, bezogen auf den Ölgehalt der Emulsion, mindestens eines cyclischen Diamins zugesetzt wird, dessen reaktive Gruppen mit mindestens einem C₂- bis C₄-Alkylenoxid alkoxyliert sind, so dass der mittlere Alkoxylierungsgrad zwischen 1 und 200 Alkylenoxideinheiten pro reaktiver Gruppe liegt, wobei unter mittlerem Alkoxylierungsgrad hier die durchschnittliche Zahl von Alkoxyeinheiten verstanden wird, die an jede reaktive Gruppe angelagert ist.

Weiterer Gegenstand der Erfindung sind cyclische Diamine, deren reaktive Gruppen mit mindestens einem C₂- bis C₄-Alkylenoxid alkoxyliert sind, so dass der mittlere Alkoxylierungsgrad zwischen 1 und 200 Alkylenoxideinheiten pro reaktiver Gruppe liegt, wobei unter mittlerem Alkoxylierungsgrad hier die durchschnittliche Zahl von Alkoxyeinheiten verstanden wird, die an jede reaktive Gruppe angelagert sind.

In einer bevorzugten Ausführungsform beträgt der mittlere Alkoxylierungsgrad 2 bis 150 Alkylenoxideinheiten, besonders bevorzugt 3 bis 100 Alkylenoxideinheiten pro reaktiver Gruppe. Unter reaktiver Gruppe werden funktionelle Gruppen verstanden, die aktive H-Atome besitzen und dadurch der Alkoxylierung zugänglich sind.

Die erfindungsgemäß als Vorprodukt eingesetzten cyclischen Diamine sind z. B. durch reduktive Aminomethylierung von cyclischen Diolefinen, wie in EP-A-1 813 595 offenbart, zugänglich. Eingesetzt werden vorzugsweise cyclische Diamine der allgemeinen Formel

H₂N-(CR¹R²)ₙ-Cyc-(CR³R⁴)ₘ=NH₂

wobei
- Cyc: für eine aliphatische, mono-, di- oder tricyclische Einheit, die insgesamt 4-20 Kohlenstoff-Atome enthält,
- R¹, R², R³, R⁴: unabhängig voneinander für H oder Methyl
- n: für eine Zahl von 0 bis 3
- m: für eine Zahl von 0 bis 3
stehen.

In der vorgenannten Ausführungsform kann Cyc ein Ringsystem ohne Substituenten sein, oder Cyc kann Kohlenwasserstoffsubstituenten mit 1 bis 6 Kohlenstoffatomen tragen. Geeignete Kohlenwasserstoffsubstituenten sind beispielsweise Methyl, Ethyl, Propyl oder Butyl, sowie Vinyl und Allyl. Nicht als Substituenten in diesem Sinne gelten die Gruppen -(CR¹R²)ₙ-NH₂ und -(CR³R⁴)ₘ-NH₂.

Cyc kann ein Ringsystem aus Kohlenstoff und Wasserstoff sein, es kann auch Heteroatome als Ringglieder umfassen. Geeignete Heteroatome sind Stickstoff und Sauerstoff. Enthält Cyc Stickstoffatome, so sind diese vorzugsweise tertiär substituiert.

Cyc enthält vorzugsweise maximal 14 Kohlenstoffatome.

Beispiele für aliphatische cyclische Einheiten Cyc sind Cyclopentan, Cyclohexan, Cycloheptan, Cyclooctan, Pyrrolidin, Piperidin, Piperazin, Decahydronaphthalin (=Decalin), Bicyclo[2.2.1]heptan (=Norbonan), 2,6,6-Trimethylbicyclo[3.1.1]heptan (=Pinan), Bicyclo[2.2.2]octan, Bicyclo[3.2.1]octan, Bicyclo[4.3.0]nonan und Tricyclo[5.2.1.0^{2,6}]decan (=Tetrahydrodicyclopentadien).

Beispiele für aus solchen Cyclen aufgebaute Diamine sind TCD-Diamin, 3(4),7(8)-Bis(aminomethyl)bicyclo[4.3.0]nonan, Isophorondiamin, 1,8-Diamino-p-menthan, 1,2-Cyclohexandiamin, 1,3-Cyclohexandiamin, 1,4-Cyclohexandiamin oder 1,4-Bis-(3-aminopropyl)-piperazin.

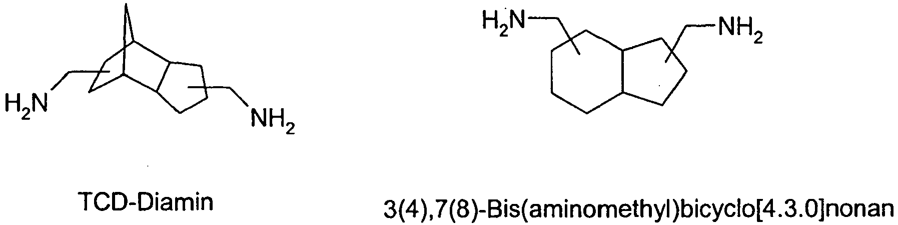

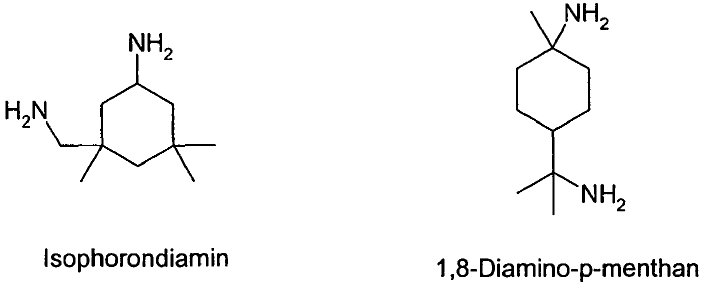

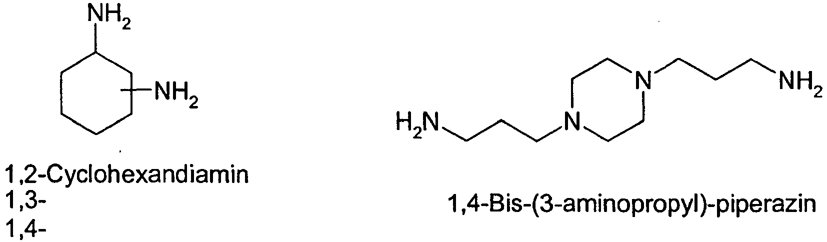

In einer bevorzugten Ausführungsform werden die alkoxylierten cyclischen Diamine vernetzt. Die Vernetzung kann sowohl vor als auch nach der Alkoxylierung erfolgen. Es ist also sowohl möglich, die noch nicht alkoxylierten cyclischen Diamine, die als Vorprodukte geeignet sind, zuerst zu vernetzen und danach zu alkoxylieren. Es ist auch möglich, die bereits alkoxylierten cyclischen Diamine zu vernetzen.

Für die Vernetzungsreaktion sind folgende Vernetzer besonders bevorzugt:
Bisphenol-A-diglycidylether, Butan-1,4-dioldiglycidylether, Hexan-1,6-dioldiglycidylether, Ethylenglykoldiglycidylether, Cyclohexandimethanoldiglycidylether, Resorcindiglycidylether, Glycerindiglycidylether, Glycerintriglycidylether, Glycerinpropoxylattriglycidylether, Polyglycerinpolyglycidylether, p-Aminophenoltriglycidylether, Polyethylenglykoldiglycidylether, Polypropylenglykoldiglycidylether, Pentaerythrittetraglycidylether, Sorbitolpolyglycidylether, Trimethylolpropantriglycidylether, Castoröltriglycidylether, Diaminobiphenyltetraglycidylether, Neopentylglykoldiglycidylether, But-2-en-1,4-dioldiglycidylether, Perhydro-Bisphenol-A-diglycidylether.

In einer bevorzugten Auführungform wird der Vernetzungsschritt vor der Alkoxylierung mit 0,1 - 1,0 mol, besonders bevorzugt 0,2 - 0,8 mol des Vernetzers, bezogen auf das cyclische Diamin, durchgeführt.

Die aus diesem Vernetzungsschritt erhaltenen vernetzten cyclischen Diamine werden in dieser Ausführungsform anschließend mit einem oder mehreren C₂-C₄-Alkoxiden, vorzugsweise Ethylenoxid (EO) oder Propylenoxid (PO) alkoxyliert, wobei die Alkylenoxid-Einheiten statistisch oder, wie im Falle einer bevorzugten Ausführungsform, blockartig angeordnet vorliegen. Das molare Verhältnis von PO zu EO liegt vorzugsweise zwischen 100:1 und 1:100, bevorzugt zwischen 60:1 und 1:60, insbesondere zwischen 30:1 und 1:30.

In einer weiteren bevorzugten Ausführungsform wird der Vernetzungsschritt nach der Propoxylierung und vor der anschließender Ethoxylierung bzw. nach der Ethoxylierung und vor der anschließenden Propoxylierung der cyclischen Diamine mit 0,5 -10, besonders bevorzugt 0,8 bis 8, speziell 1 - 5 Gew-% Vernetzer, bezogen auf das Alkoxylat, durchgeführt. Das Verhältnis von PO zu EO liegt vorzugsweise zwischen 100:1 und 1:100, bevorzugt zwischen 60:1 und 1:60, insbesondere zwischen 30:1 und 1:30.

In einer weiteren bevorzugten Ausführungsform wird der Vernetzungsschritt nach der Alkoxylierung der cyclischen Diamine mit 0,5 -10, besonders bevorzugt 0,8 bis 8, speziell 1 - 5 Gew-% Vernetzer, bezogen auf das Alkoxylat, durchgeführt. Das Verhältnis von PO zu EO liegt vorzugsweise zwischen 100:1 und 1:100, bevorzugt zwischen 60:1 und 1:60, insbesondere zwischen 30:1 und 1:30.

Die nach Vernetzung und Alkoxylierung erhaltenen alkoxylierten cyclischen Diamine haben vorzugsweise ein Molekulargewicht von 500 bis 200.000 Einheiten, insbesondere von 1000 bis 100.000 Einheiten.

Die alkoxylierten cyclischen Diamine haben in bevorzugter Ausführungsform eine Wasserzahl von 10 - 26. Die Wasserzahl ist eine einheitslose Zahl und wird gemäß DIN EN 12836 bestimmt.

Die Wasserzahl beschreibt den HLB-Wert (hydrophilic-lipophilic balance) von grenzflächenaktiven Substanzen und ist ein Maß für die Wasserlöslichkeit der alkoxylierten cyclischen Diamine. Eine hohe Wasserzahl von mehr als 18 bedeutet eine gute Wasserlöslichkeit, eine niedrige Wasserzahl von weniger als 13 bedeutet eine gute Öllöslichkeit. Die Wasserzahl hängt vom Verhältnis der Zahl der EO-Gruppen zu PO-Gruppen ab. Die alkoxylierten cyclischen Diamine mit hoher Wasserzahl spalten im Allgemeinen Emulsionen schneller, erzeugen allerdings ein abgetrenntes Wasser mit größerem Ölgehalt. Bei kleiner Wasserzahl erfolgt die Spaltung im Allgemeinen langsamer, dafür ist der Ölgehalt des abgetrennten Wassers geringer.

Ein bevorzugter Gegenstand vorliegender Erfindung ist die Verwendung der alkoxylierten vernetzten cyclischen Diamine als Spalter für Öl/Wasser-Emulsionen in der Erdölförderung.

Zur Verwendung als Erdölspalter werden die alkoxylierten, vernetzten cyclischen Diamine den Wasser in Öl-Emulsionen zugesetzt, was vorzugsweise in Lösung geschieht. Als Lösungsmittel für die alkoxylierten, vernetzten cyclischen Diamine werden paraffinische, aromatische oder alkoholische Lösungsmittel bevorzugt. Die alkoxylierten, vernetzten cyclischen Diamine werden in Mengen von 0,0001 bis 5, vorzugsweise 0,0005 bis 2, insbesondere 0,0008 bis 1 und speziell 0,001 bis 0,1 Gew.-% bezogen auf den Ölgehalt der zu spaltenden Emulsion verwendet.

### Beispiele

### Allgemeine Vorschrift 1: Aminvernetzung vor Alkoxylierung

In einem 500 ml Dreihalskolben mit Kontaktthermometer, Rührer und Rückflusskühler wurden 1 mol Diamin, 0,2 - 0,8 mol Vernetzer und alkalischer Katalysator (Endalkalizahl 0,5 - 3,5 mg KOH/g) vermischt. Unter Rühren wurde das Reaktionsgemisch schrittweise binnen drei Stunden auf 120 °C erhitzt und anschließend bei dieser Temperatur nachreagiert. Die Vollständigkeit der Reaktion (in der Regel 3 - 4 Stunden) wird durch Bestimmung der Epoxidzahl bestimmt.

### Allgemeine Vorschrift 2: Vernetzung des alkoxylierten Amins

In einem 500 ml Dreihalskolben mit Kontaktthermometer, Rührer und Rückflusskühler wurden 1 mol Diamin, 1,0 - 5,0 Gew-% Vernetzer und alkalischer Katalysator (Endalkalizahl 0,5 mg KOH/g) vermischt. Unter Rühren wurde das Reaktionsgemisch schrittweise auf 120 °C erhitzt und anschließend bei dieser Temperatur nachreagiert. Die Vollständigkeit der Reaktion (in der Regel 6 - 8 Stunden) wird durch Bestimmung der Epoxidzahl bestimmt.

### Allgemeine Vorschrift Alkoxylierung

### Ethoxylierung vernetztes Amin

Die nach den allgemeinen Vernetzungsvorschriften 1 und 2 erhaltenen vernetzten Diamine oder deren Oxpropylate wurden in einen 1 I-Glasautoklaven eingebracht und mit Natriummethylatlösung eine Endalkalizahl von ca. 2,5 mg KOH/g Substanz eingestellt. Der Autoklav wurde mit Stickstoff inertisiert, nach Druckprobe auf 135 °C aufgeheizt und der Druck im Autoklaven mit Stickstoff auf ca. 0,8 - 1,0 bar eingestellt. Danach wurde bei maximal 140 °C die gewünschte Ethylenoxidmenge zudosiert, wobei der Druck 4,5 bar nicht übersteigen sollte. Nach der Dosierung wird bei maximal 140 °C bis zur Druckkonstanz nachreagiert.

### Propoxylierung vernetztes Amin

Die nach den allgemeinen Vernetzungsvorschriften 1 und 2 erhaltenen vernetzten Diamine oder deren Oxethylate wurden in einen 1 I-Glasautoklaven eingebracht und mit Natriummethylatlösung eine Endalkalizahl von ca. 1,5 mg KOH/g Substanz eingestellt. Der Autoklav wurde mit Stickstoff inertisiert, nach Druckprobe auf 125 °C aufgeheizt und der Druck im Autoklaven mit Stickstoff auf ca. 0,8 - 1,0 bar eingestellt. Danach wurde bei maximal 130 °C die gewünschte Propylenoxidmenge zudosiert, wobei der Druck 3,5 bar nicht übersteigen sollte. Nach der Dosierung wird bei maximal 130 °C bis zur Druckkonstanz nachreagiert.

### Ethoxylierung unvernetztes Amin

Die Diamine oder deren Oxpropylate wurden in einen 1 I-Glasautoklaven eingebracht und mit Natriummethylatlösung eine Endalkalizahl von ca. 2,5 mg KOH/g Substanz eingestellt. Der Autoklav wurde mit Stickstoff inertisiert, nach Druckprobe auf 135 °C aufgeheizt und der Druck im Autoklaven mit Stickstoff auf ca. 0,8 - 1,0 bar eingestellt. Danach wurde bei maximal 140 °C die gewünschte Ethylenoxidmenge zudosiert, wobei der Druck 4,5 bar nicht übersteigen sollte. Nach der Dosierung wird bei maximal 140 °C bis zur Druckkonstanz nachreagiert.

### Propoxylierung unvernetztes Amin

Die Diamine oder deren Oxethylate wurden in einen 1 I-Glasautoklaven eingebracht und mit Natriummethylatlösung eine Endalkalizahl von ca. 1,5 mg KOH/g Substanz eingestellt. Der Autoklav wurde mit Stickstoff inertisiert, nach Druckprobe auf 125 °C aufgeheizt und der Druck im Autoklaven mit Stickstoff auf ca. 0,8 - 1,0 bar eingestellt. Danach wurde bei maximal 130 °C die gewünschte Propylenoxidmenge zudosiert, wobei der Druck 3,5 bar nicht übersteigen sollte: Nach der Dosierung wird bei maximal 130 °C bis zur Druckkonstanz nachreagiert.

**Tabelle 1: TCD-Diamin + Butan-1,4-dioldiglycidylether + PO + EO**

| Beispiel | Molverhältnis Amin zu Vernetzer | mol PO pro mol Diamin | mol EO pro mol Diamin | Wasserzahl |
|---|---|---|---|---|
| 1 | 1:0,5 | 26 | 0 | 11,6 |
| 2 | 1:0,5 | 26 | 7,5 | 17,5 |
| 3 | 1:0,5 | 26 | 11 | 19,7 |
| 4 | 1:0,5 | 26 | 12,5 | 20,4 |
| 5 | 1:0,5 | 26 | 14 | 21,3 |
| 6 | 1:0,5 | 26 | 16 | 22,6 |
| 7 | 1:0,5 | 31 | 0 | 11,4 |
| 8 | 1:0,5 | 31 | 9 | 17 |
| 9 | 1:0,5 | 31 | 12 | 19,2 |
| 10 | 1:0,5 | 31 | 14 | 20,5 |
| 11 | 1:0,5 | 31 | 16,5 | 21,4 |
| 12 | 1:0,5 | 31 | 18,5 | 22,2 |
| 13 | 1:0,5 | 36 | 0 | 10,5 |
| 14 | 1:0,5 | 36 | 8 | 15,2 |
| 15 | 1:0,5 | 36 | 11 | 17,8 |
| 16 | 1:0,5 | 36 | 14 | 18,7 |
| 17 | 1:0,5 | 36 | 16 | 19,5 |
| 18 | 1:0,5 | 36 | 19 | 21,8 |
| 19 | 1:0,5 | 42 | 0 | 10,5 |
| 20 | 1:0,5 | 42 | 8,5 | 15,1 |
| 21 | 1:0,5 | 42 | 14 | 17,8 |
| 22 | 1:0,5 | 42 | 18,5 | 20,4 |

**Tabelle 2: Isophorondiamin + Butan-1,4-dioldiglycidylether + PO + EO**

| Beispiel | Molverhältnis | mol PO pro | mol EO pro | Wasserzahl |
|---|---|---|---|---|
| | Amin zu Vernetzer | mol Diamin | mol Diamin | |
| 23 | 1:0,5 | 20 | 0 | 13,1 |
| 24 | 1:0,5 | 20 | 6 | 17,5 |
| 25 | 1:0,5 | 20 | 8 | 18,1 |
| 26 | 1:0,5 | 20 | 10 | 21,1 |
| 27 | 1:0,5 | 39 | 0 | 13,2 |
| 28 | 1:0,5 | 39 | 12 | 14,7 |
| 29 | 1:0,5 | 39 | 18 | 16,3 |

**Tabelle 3: Isophorondiamin + Bisphenol-A-diglycidylether + PO + EO**

| Beispiel | Molverhältnis Amin zu Vernetzer | mol PO pro mol Diamin | mol EO pro mol Diamin | Wasserzahl |
|---|---|---|---|---|
| 30 | 1:0,25 | 20 | 0 | 16,1 |
| 31 | 1:0,25 | 20 | 7 | 19,5 |
| 32 | 1:0,25 | 20 | 13 | 21,2 |
| 33 | 1:0,25 | 20 | 21 | 22,4 |

**Tabelle 4: TCD-Diamin + PO+ Bisphenol-A-diglycidylether + EO**

| Beispiel | mol PO pro | Gew-% Vernetzer | mol EO pro | Wasserzahl |
|---|---|---|---|---|
| | mol Diamin | | mol Diamin | |
| 34 | 20 | 2,5 | 29 | 22,8 |
| 35 | 20 | 2,5 | 43 | 23,7 |
| 36 | 20 | 5 | 25,5 | 22,3 |
| 37 | 20 | 5 | 38,5 | 23,0 |
| 38 | 40 | 2,5 | 16,5 | 15,2 |
| 39 | 40 | 2,5 | 53,5 | 23,2 |
| 40 | 40 | 2,5 | 76 | 24 |
| 41 | 40 | 5 | 20,5 | 16,1 |
| 42 | 40 | 5 | 44,5 | 22,9 |
| 43 | 40 | 5 | 68 | 24,5 |

**Tabelle 5: TCD-Diamin + PO+ EO + Bisphenol-A-diglycidylether**

| Beispiel | mol PO pro mol Diamin | mol EO pro mol Diamin | Gew-% Vernetzer | Wasserzahl |
|---|---|---|---|---|
| 44 | 40 | 22 | 0 | 18,1 |
| 45 | 40 | 44 | 0 | 21,6 |
| 46 | 40 | 63 | 0 | 23,7 |
| 47 | 40 | 22 | 2,5 | --* |
| 48 | 40 | 44 | 2,5 | --* |
| 49 | 40 | 63 | 2,5 | --* |
| 50 | 60 | 22,5 | 0 | 15,4 |
| 51 | 60 | 31,5 | 0 | 19,5 |
| 52 | 60 | 38 | 0 | 25,5 |
| 53 | 60 | 21,5 | 2,5 | --* |
| 54 | 60 | 31,5 | 2,5 | --* |
| 55 | 60 | 38 | 2,5 | --* |

| | | | | |
|---|---|---|---|---|
| * Bei Endvernetzung konnte eine Wasserzahlbestimmung nicht durchgeführt werden | | | | |

### Bestimmung der Spaltwirksamkeit von Erdölemulsionsspaltern

Zur Bestimmung der Wirksamkeit eines Emulsionsspalters wurde die Wasserabscheidung aus einer Rohölemulsion pro Zeit sowie die Entwässerung des Öls bestimmt. Dazu wurden in Spaltergläser (konisch zulaufende, verschraubbare, graduierte Glasflaschen) jeweils 100 ml der Rohölemulsion eingefüllt, jeweils eine definierte Menge des Emulsionsspalters mit einer Mikropipette knapp unter die Oberfläche der Ölemulsion zudosiert und der Spalter durch intensives Schütteln in die Emulsion eingemischt. Danach wurden die Spaltergläser in ein Temperierbad gestellt und die Wasserabscheidung verfolgt.

Nach beendeter Emulsionsspaltung wurden Proben von dem Öl aus dem oberen Teil des Spalterglases (sog. Topöl) entnommen. Ein 15 ml Zentrifugengläschen (graduiert) wird mit 5 ml Shellsol^{®} A 150 ND und 10 ml Ölprobe gefüllt, das Gläschen von Hand geschüttelt, um eine Durchmischung zu erzielen, und anschließend bei 1500 upm 5 Minuten zentrifugiert. Nach der Zentrifugierung beobachtet man im Zentrifugengläschen 3 Phasen, eine klare Wasserphase, eine braune Emulsionsphase und eine schwarze Ölphase. Die abgelesenen Volumina der Wasser- bzw. Emulsionsphase werden mit dem Faktor 10 multipliziert und die so ermittelten Werte als %-Wasser- und %-Emulsion angegeben. Der Rest auf 100% ist die Ölphase. Eine besonders gute Demulgierung liegt dann vor, wenn die Summe aus %-Wasser- und %-Emulsion möglichst klein ist. Im Vergleich zweier gleicher Summen aus %-Wasser- und %-Emulsion ist es bevorzugt, wenn der Anteil %-Wasser möglichst groß ist. Auf diese Weise konnten die neuen Spalter nach Wasserabscheidung sowie Entwässerung des Öls beurteilt werden. Die Qualität des abgetrennten Wassers wurde durch einen geübten Beobachter beurteilt. Es bedeuten
- der Eintrag "+", dass das abgetrennt Wasser klar ist
- der Eintrag "O", dass das abgetrennte Wasser trüb ist
- der Eintrag "-", dass das abgetrennte Wasser durch Verölung intransparent ist.

### Spaltwirkung der beschriebenen Spalter

Ursprung der Rohölemulsion: Hebertshausen, Deutschland
Wassergehalt der Emulsion: 48 %
Demulgiertemperatur: 50 °C

Tabelle 6 gibt die Wirksamkeit der alkoxylierten cyclischen Diamine als Emulsionsspalter im Vergleich zu Dissolvan V 5252-1 c. und Dissolvan V 5566-1 c. (100 ppm) an. Dargestellt sind die Wasserabscheidung in ml nach der angegebenen Zeit.

**Tabelle 6: Spaltwirksamkeit**

| Beispiel | Produkt aus Beispiel | Wasserabscheidung [ml] nach angegebener Zeit [min] | | | | | %-Wasser | %-Emulsion | Wasser |
|---|---|---|---|---|---|---|---|---|---|
| | | 10 | 20 | 30 | 60 | 120 | | | |
| 56 | 10 | 1 | 8 | 21 | 39 | 44 | 2 | 0 | + |
| 57 | 24 | 0,5 | 4 | 16 | 40 | 42 | 1 | 1 | ○ |
| 58 | 25 | 4 | 17 | 28 | 40 | 42 | 1,5 | 1 | ○ |
| 59 | 34 | 0,5 | 4 | 17 | 30 | 32 | 0,5 | 0,5 | + |
| 60 | 35 | 1,5 | 8 | 20 | 38 | 46 | 1 | 0 | + |
| 61 | 36 | 0,5 | 2 | 12 | 34 | 36 | 1 | 1 | + |
| 62 | 38 | 6 | 28 | 40 | 44 | 46 | 2 | 0 | + |
| 63 | 41 | 2 | 15 | 32 | 42 | 46 | 2 | 0 | + |
| 64 | 44 | 2 | 14 | 42 | 42 | 46 | 2,5 | 0 | + |
| 65 | 45 | 0,5 | 3 | 10 | 36 | 38 | 1 | 1 | ○ |
| 66 | 47 | 3 | 28 | 43 | 45 | 46 | 2,5 | 0 | + |
| 67 | 48 | 0,5 | 2 | 6 | 34 | 36 | 0,5 | 2 | ○ |
| 68 | 50 | 0,5 | 14 | 34 | 44 | 48 | 1 | 0 | + |
| 69 | 51 | 2 | 12 | 33 | 43 | 46 | 1 | 0 | + |
| 70 | 53 | 23 | 30 | 33 | 45 | 46 | 0,5 | 1,5 | + |
| 71 | 54 | 3 | 17 | 30 | 42 | 44 | 1,5 | 0,5 | + |
| 72 (V) | Dissolvan^{®} V 5252-1 c. | 1 | 5 | 33 | 40 | 44 | 2 | 1 | + |
| 73 (V) | Dissolvan^{®} V 5566-1 c. | 22 | 36 | 42 | 45 | 48 | 0,5 | 2,5 | ○ |

## Patentansprüche

1. Verwendung von alkoxylierten cyclischen Diaminen, deren reaktive Gruppen mit mindestens einem C₂- bis C₄-Alkylenoxid alkoxyliert sind, und deren mittlerer Alkoxylierungsgrad zwischen 1 und 200 Alkylenoxideinheiten pro reaktiver Gruppe liegt, und worin das cyclische Diamin der Formel (1) entspricht,
H₂N-(CR¹R²)ₙ-Cyc-(CR³R⁴)ₘ-NH₂ (1)
worin
Cyc für eine aliphatische, mono-, di- oder tricyclische Einheit, die insgesamt 4-20 Kohlenstoff-Atome enthält,
R¹, R², R³, R⁴ unabhängig voneinander für H oder Methyl
n für eine Zahl von 0 bis 3
m für eine Zahl von 0 bis 3
stehen, in Mengen von 0,0001 bis 5 Gew.-%, bezogen auf den Ölgehalt der zu spaltenden Emulsion, zur Spaltung von Wasser in Öl-Emulsionen.

2. Verwendung nach Anspruch 1, wobei die alkoxylierten cyclischen Diamine vernetzt sind.

3. Verwendung nach Anspruch 2, worin die Vernetzung mit multifunktionellen Glycidylethern vor der Alkoxylierung erfolgt und das das Molverhältnis von multifunktionelle Glycidylether zu cyclischem Diamin 0,2 - 0,8 beträgt.

4. Verwendung nach Anspruch 2 und/oder 3, worin die Vernetzung mit multifunktionellen Glycidylethern bei blockweiser Alkoxylierung zwischen den einzelnen Blöcken erfolgt.

5. Verwendung nach Anspruch 2 und/oder 4, worin die Vernetzung mit multifunktionellen Glycidylethern nach der Alkoxylierung erfolgt.

6. Verwendung nach einem oder mehreren der Ansprüche 3 bis 5, worin der multifunktionelle Glycidylether mit 1 - 5 Gew-%, bezogen auf das alkoxylierte Diamin, eingesetzt wird.

7. Verwendung nach einem oder mehreren der Ansprüche 2 bis 6, worin der Vernetzer ausgewählt ist aus Bisphenol-A-diglycidylether, Butan-1,4-dioldiglycidylether, Hexan-1,6-dioldiglycidylether, Ethylenglykoldiglycidylether, Cyclohexandimethanoldiglycidylether, Resorcindiglycidylether, Glycerindiglycidylether, Glycerintriglycidylether, Glycerinpropoxylattriglycidylether, Polyglycerinpolyglycidylether, p-Aminophenoltriglycidylether, Polyethylenglykoldiglycidylether, Polypropylenglykoldiglycidylether, Pentaerythrittetraglycidylether, Sorbitolpolyglycidylether, Trimethylolpropantriglycidylether, Castoröltriglycidylether, Diaminobiphenyltetraglycidylether, Neopentylglykoldiglycidylether, But-2-en-1,4-dioldiglycidylether, Perhydro-Bisphenol-A-diglycidylether.

8. Verwendung nach einem oder mehreren der Ansprüche 1 bis 7, worin als Alkylenoxide Propylenoxid und Ethylenoxid eingesetzt werden, wobei das Verhältnis der Propylenoxid-Einheiten zu den Ethylenoxid-Einheiten im alkoxylierten cyclischen Diamin zwischen 30:1 und 1:30 liegt.

9. Verwendung nach einem oder mehreren der Ansprüche 1 bis 8, worin der mittlere Alkoxylierungsgrad pro reaktiver Gruppe zwischen 3 und 100 liegt.

10. Verwendung nach einem oder mehreren der Ansprüche 1 bis 9, worin die alkoxylierten cyclischen Diamine ein Molgewicht von 1000 bis 100.000 Einheiten haben.

11. Verwendung nach einem oder mehreren der Ansprüche 1 bis 4 und 6 bis 10, worin die alkoxylierten cyclischen Diamine eine Wasserzahl von 10 bis 26 aufweisen.

12. Alkoxylierte cyclische Diamine, deren reaktive Gruppen mit mindestens einem C₂- bis C₄-Alkylenoxid alkoxyliert sind, und deren mittlerer Alkoxylierungsgrad zwischen 3 und 100 Alkylenoxideinheiten pro reaktiver Gruppe liegt und die ein zahlenmittleres Molekulargewicht von 1000 bis 100.000 g/mol aufweisen, und worin das cyclische Diamin der Formel (1) entspricht,
H₂N-(CR¹R²)ₙ-Cyc-(CR³R⁴)ₘ-NH₂ (1)
worin
Cyc für eine aliphatische, mono-, di- oder tricyclische Einheit, die insgesamt 4-20 Kohlenstoff-Atome enthält,
R¹, R², R³, R⁴ unabhängig voneinander für H oder Methyl
n für eine Zahl von 0 bis 3
m für eine Zahl von 0 bis 3
stehen, welche vernetzt sind, und worin der Vernetzer ausgewählt ist aus Bisphenol-A-diglycidylether, Butan-1,4-dioldiglycidylether, Hexan-1,6-dioldiglycidylether, Ethylenglykoldiglycidylether, Cyclohexandimethanoldiglycidylether, Resorcindiglycidylether, Glycerindiglycidylether, Glycerintriglycidylether, Glycerinpropoxylattriglycidylether, Polyglycerinpolyglycidylether, p-Aminophenoltriglycidylether, Polyethylenglykoldiglycidylether, Polypropylenglykoldiglycidylether, Pentaerythrittetraglycidylether, Sorbitolpolyglycidylether, Trimethylolpropantriglycidylether, Castoröltriglycidylether, Diaminobiphenyltetraglycidylether, Neopentylglykoldiglycidylether, But-2-en-1,4-dioldiglycidylether, Perhydro-Bisphenol-A-diglycidylether.

13. Verfahren zur Spaltung einer Wasser-in-Öl-Emulsion, indem der Emulsion 0,0001 bis 5 Gew.-%, bezogen auf das Gewicht der Emulsion, mindestens eines alkoxylierten cyclischen Diamines zugesetzt wird, welches ein zahlenmittleres Molekulargewicht von 1000 bis 100.000 g/mol aufweist, deren reaktive Gruppen mit mindestens einem C₂- bis C₄-Alkylenoxid alkoxyliert sind, so dass der mittlere Alkoxylierungsgrad 3 bis 100 Alkoxyeinheiten pro reaktiver Gruppe beträgt, und worin das cyclische Diamin der Formel (1) entspricht,
H₂N-(CR¹R²)ₙ-Cyc-(CR³R⁴)ₘ-NH₂ (1)
worin
Cyc für eine aliphatische, mono-, di- oder tricyclische Einheit, die insgesamt 4-20 Kohlenstoff-Atome enthält,
R¹, R², R³, R⁴ unabhängig voneinander für H oder Methyl
n für eine Zahl von 0 bis 3
m für eine Zahl von 0 bis 3
stehen.

## Claims

1. The use of alkoxylated cyclic diamines whose reactive groups are alkoxylated with at least one C₂ to C₄ alkylene oxide and whose average degree of alkoxylation is between 1 and 200 alkylene oxide units per reactive group, and wherein the cyclic diamine conforms to formula (1),
H₂N-(CR¹R²)ₙ-Cyc-(CR³R⁴)ₘ-NH₂ (1)
where
Cyc represents an aliphatic mono-, di- or tricyclic unit containing altogether 4-20 carbon atoms,
R¹, R², R³ and R⁴ each independently represent H or methyl,
n represents a number from 0 to 3, and
m represents a number from 0 to 3,
in amounts of 0.0001 % to 5% by weight, based on the oil content of the emulsion to be broken, for breaking water-in-oil emulsions.

2. The use according to claim 1 wherein the alkoxylated cyclic diamines are in a crosslinked state.

3. The use according to claim 2 wherein the crosslinking is effected with multifunctional, glycidyl ethers before the alkoxylation and the molar ratio of multifunctional glycidyl ether to cyclic diamine is 0.2 - 0.8.

4. The use according to claim 2 and/or 3 wherein the crosslinking is effected with multifunctional glycidyl ethers at blockwise alkoxylation between the individual blocks.

5. The use according to claim 2 and/or 4 wherein the crosslinking is effected with multifunctional glycidyl ethers after the alkoxylation.

6. The use according to one or more of claims 3 to 5 wherein the multifunctional glycidyl ether is used at 1 - 5% by weight, based on the alkoxylated diamine.

7. The use according to one or more of claims 2 to 6 wherein the crosslinker is selected from bisphenol A diglycidyl ether, butane-1,4-diol diglycidyl ether, hexane-1,6-diol diglycidyl ether, ethylene glycol diglycidyl ether, cyclohexanedimethanol diglycidyl ether, resorcinol diglycidyl ether, glycerol diglycidyl ether, glycerol triglycidyl ether, glycerol propoxylate triglycidyl ether, polyglycerol polyglycidyl ether, p-aminophenol triglycidyl ether, polyethylene glycol diglycidyl ether, polypropylene glycol diglycidyl ether, pentaerythritol tetraglycidyl ether, sorbitol polyglycidyl ether, trimethylolpropane triglycidyl ether, castor oil triglycidyl ether, diaminobiphenyl tetraglycidyl ether, neopentylglycol diglycidyl ether, but-2-ene-1,4-diol diglycidyl ether, perhydro bisphenol A diglycidyl ether.

8. The use according to one or more of claims 1 to 7 wherein propylene oxide and ethylene oxide are used as alkylene oxides and the ratio of propylene oxide units to ethylene oxide units in the alkoxylated cyclic diamine is between 30:1 and 1:30.

9. The use according to one or more of claims 1 to 8 wherein the average degree of alkoxylation per reactive group is between 3 and 100.

10. The use according to one or more of claims 1 to 9 wherein the alkoxylated cyclic diamines have a molecular weight of 1000 to 100 000 units.

11. The use according to one or more of claims 1 to 4 and 6 to 10 wherein the alkoxylated cyclic diamines have a water number of 10 to 26.

12. An alkoxylated cyclic diamine whose reactive groups are alkoxylated with at least one C₂ to C₄ alkylene oxide and whose average degree of alkoxylation is between 3 and 100 alkylene oxide units per reactive group and which has a number average molecular weight of 1000 to 100 000 g/mol, and wherein the cyclic diamine conforms to the formula (1),
H₂N-(CR¹R²)ₙ-Cyc-(CR³R⁴)ₘ-NH₂ (1)
where
Cyc represents an aliphatic mono-, di- or tricyclic unit containing altogether 4-20 carbon atoms,
R¹, R², R³ and R⁴ each independently represent H or methyl,
n represents a number from 0 to 3, and
m represents a number from 0 to 3,
which are in a crosslinked state and wherein the crosslinker is selected from bisphenol A diglycidyl ether, butane-1,4-diol diglycidyl ether, hexane-1,6-diol diglycidyl ether, ethylene glycol diglycidyl ether, cyclohexanedimethanol diglycidyl ether, resorcinol diglycidyl ether, glycerol diglycidyl ether, glycerol triglycidyl ether, glycerol propoxylate triglycidyl ether, polyglycerol polyglycidyl ether, p-aminophenol triglycidyl ether, polyethylene glycol diglycidyl ether, polypropylene glycol diglycidyl ether, pentaerythritol tetraglycidyl ether, sorbitol polyglycidyl ether, trimethylolpropane triglycidyl ether, castor oil triglycidyl ether, diaminobiphenyl tetraglycidyl ether, neopentylglycol diglycidyl ether, but-2-ene-1,4-diol diglycidyl ether, perhydro bisphenol A diglycidyl ether.

13. A process for breaking a water-in-oil emulsion by adding to the emulsion from 0.0001 % to 5% by weight, based on the weight of the emulsion, of at least one alkoxylated cyclic diamine which has a number average molecular weight of 1000 to 100 000 g/mol, the reactive groups of which are alkoxylated with at least one C₂ to C₄ alkylene oxide, so that the average degree of alkoxylation is 3 to 100 alkoxy units per reactive group, and wherein the cyclic diamine conforms to the formula (1),
H₂N-(CR¹R²)ₙ-Cyc-(CR³R⁴)ₘ-NH₂ (1)
where
Cyc represents an aliphatic mono-, di- or tricyclic unit containing altogether 4-20 carbon atoms,
R¹, R², R³ and R⁴ each independently represent H or methyl,
n represents a number from 0 to 3, and
m represents a number from 0 to 3.

## Revendications

1. Utilisation de diamines cycliques alcoxylées, dont les groupes réactifs sont alcoxylés par au moins un oxyde d'alkylène en C₂-C₄, et dont le degré d'alcoxylation moyen se situe entre 1 et 200 unités d'oxyde d'alkylène par groupe réactif, et dans laquelle la diamine cyclique correspond à la formule (1)
H₂N-(CR¹R²)ₙ-Cyc-(CR³R⁴)ₘ-NH₂ (1)
où
Cyc représente une unité aliphatique monocyclique, dicyclique ou tricyclique, qui contient au total 4-20 atomes de carbone,
R¹, R², R³, R⁴ représentent, indépendamment l'un de l'autre, H ou méthyle,
n vaut un nombre de 0 à 3,
m vaut un nombre de 0 à 3,
en des quantités de 0,0001 à 5% en poids, par rapport à la teneur en huile de l'émulsion à dissocier, pour la dissociation de l'eau dans des émulsions d'huile.

2. Utilisation selon la revendication 1, les diamines cycliques alcoxylées étant réticulées.

3. Utilisation selon la revendication 2, dans laquelle la réticulation a lieu avec des glycidyléthers multifonctionnels avant l'alcoxylation et le rapport molaire de glycidyléther multifonctionnel à diamine cyclique vaut 0,2-0,8.

4. Utilisation selon la revendication 2 et/ou 3, dans laquelle la réticulation avec les glycidyléthers multifonctionnels a lieu entre les différents blocs dans le cas d'une alcoxylation par blocs.

5. Utilisation selon la revendication 2 et/ou 4, dans laquelle la réticulation avec les glycidyléthers multifonctionnels a lieu après l'alcoxylation.

6. Utilisation selon l'une ou plusieurs des revendications 3 à 5, dans laquelle le glycidyléther multifonctionnel est utilisé à raison de 1-5% en poids, par rapport à la diamine alcoxylée.

7. Utilisation selon l'une ou plusieurs des revendications 2 à 6, dans laquelle le réticulant est choisi parmi le bisphénol-A-diglycidyléther, le butane-1,4-dioldiglycidyléther, l'hexane-1,6-dioldiglycidyléther, l'éthylèneglycoldiglycidyléther, le cyclohexanediméthanoldiglycidyléther, le résorcinoldiglycidyléther, le glycéroldiglycidyléther, le glycéroltriglycidyléther, le triglycidyléther de propoxylate de glycérol, le polyglycérolpolyglycidyléther, le p-aminophénoltriglycidyléther, le polyéthylèneglycoldiglycidyléther, le polypropylèneglycoldiglycidyléther, le pentaérythritoltétraglycidyléther, le sorbitolpolyglycidyléther, le triméthylolpropanetriglycidyléther, le triglycidyléther d'huile de ricin, le diaminobiphényltétraglycidyléther, le néopentylglycoldiglycidyléther, le but-2-én-1,4-dioldiglycidyléther, le perhydro-bisphénol-A-diglycidyléther.

8. Utilisation selon l'une ou plusieurs des revendications 1 à 7, dans laquelle on utilise, comme oxydes d'alkylène, de l'oxyde de propylène et de l'oxyde d'éthylène, le rapport des unités d'oxyde de propylène aux unités d'oxyde d'éthylène dans la diamine cyclique alcoxylée étant situé entre 30:1 et 1:30.

9. Utilisation selon l'une ou plusieurs des revendications 1 à 8, dans laquelle le degré d'alcoxylation moyen par groupe réactif se situe entre 3 et 100.

10. Utilisation selon l'une ou plusieurs des revendications 1 à 9, dans laquelle les diamines cycliques alcoxylées présentent un poids moléculaire de 1000 à 100 000 unités.

11. Utilisation selon l'une ou plusieurs des revendications 1 à 4 et 6 à 10, dans laquelle les diamines cycliques alcoxylées présentent un indice d'eau de 10 à 26.

12. Diamines cycliques alcoxylées, dont les groupes réactifs sont alcoxylés par au moins un oxyde d'alkylène en C₂-C₄, et dont le degré d'alcoxylation moyen se situe entre 3 et 100 unités d'oxyde d'alkylène par groupe réactif et qui présentent un poids moléculaire numérique moyen de 1000 à 100 000 g/mole, et dans lesquelles la diamine cyclique correspond à la formule (1)
H₂N-(CR¹R²)ₙ-Cyc-(CR³R⁴)ₘ-NH₂ (1)
où
Cyc représente une unité aliphatique monocyclique, dicyclique ou tricyclique, qui contient au total 4-20 atomes de carbone,
R¹, R², R³, R⁴ représentent, indépendamment l'un de l'autre, H ou méthyle,
n vaut un nombre de 0 à 3,
m vaut un nombre de 0 à 3,
qui sont réticulées et dans lesquelles le réticulant est choisi parmi le bisphénol-A-diglycidyléther, le butane-1,4-dioldiglycidyléther, l'hexane-1,6-dioldiglycidyléther, l'éthylèneglycoldiglycidyléther, le cyclohexanediméthanoldiglycidyléther, le résorcinoldiglycidyléther, le glycéroldiglycidyléther, le glycéroltriglycidyléther, le triglycidyléther de propoxylate de glycérol, le polyglycérolpolyglycidyléther, le p-aminophénoltriglycidyléther, le polyéthylèneglycoldiglycidyléther, le polypropylèneglycoldiglycidyléther, le pentaérythritoltétraglycidyléther, le sorbitolpolyglycidyléther, le triméthylolpropanetriglycidyléther, le triglycidyléther d'huile de ricin, le diaminobiphényltétraglycidyléther, le néopentylglycoldiglycidyléther, le but-2-én-1,4-dioldiglycidyléther, le perhydro-bisphénol-A-diglycidyléther.

13. Procédé pour la dissociation d'une émulsion eau-dans-huile, en ce que l'émulsion est additionnée de 0,0001 à 5% en poids, par rapport au poids de l'émulsion, d'au moins une diamine cyclique alcoxylée, qui présente un poids moléculaire numérique moyen de 1000 à 100 000 g/mole, dont les groupes réactifs sont alcoxylés avec au moins un oxyde d'alkylène en C₂-C₄, de manière telle que le degré d'alcoxylation moyen vaut 3 à 100 unités alcoxy par groupe réactif, et dans laquelle la diamine cyclique correspond à la formule (1),
H₂N-(CR¹R²)ₙ-Cyc-(CR³R⁴)ₘ-NH₂ (1)
où
Cyc représente une unité aliphatique monocyclique, dicyclique ou tricyclique, qui contient au total 4-20 atomes de carbone,
R¹, R², R³, R⁴ représentent, indépendamment l'un de l'autre, H ou méthyle,
n vaut un nombre de 0 à 3,
m vaut un nombre de 0 à 3.
